# EUROPEAN PATENT APPLICATION

(11) **EP 3 812 868 A1**
(43) Date of publication of application: **28.04.2021**
(21) Application number: 20200948.6
(22) Date of filing: 09.10.2020
(51) Int. Cl.: G05D 1/02, B60W 30/08, B60W 60/00, B60W 30/095, B60W 50/00

(54) **TASK SCHEDULING METHOD, APPARATUS, DEVICE, AND COMPUTER READABLE STORAGE MEDIUM**

(30) Priority: 11.11.2019 CN 201911092548
(71) Applicant: BEIJING BAIDU NETCOM SCIENCE AND TECHNOLOGY CO. LTD., 100085 Beijing (CN)
(72) Inventor: ZHANG, Lei, Beijing, Beijing 100085 (CN); YANG, Kai, Beijing, Beijing 100085 (CN); ZHANG, Hongda, Beijing, Beijing 100085 (CN); YIN, Qijuan, Beijing, Beijing 100085 (CN); WANG, Xiaoyan, Beijing, Beijing 100085 (CN); ZHANG, Wuzhao, Beijing, Beijing 100085 (CN)
(74) Representative: Samson & Partner Patentanwälte mbB

(57) **Abstract**

The present disclosure provides a task scheduling method, an apparatus, a device and a computer readable storage medium provided by the, and an implementation solution thereof includes: identifying obstacle information of an obstacle around a vehicle; determining a safety level of the obstacle according to driving information and the obstacle information of the vehicle; determining a driving task according to the obstacle information, determining a safety level of the driving task according to the safety level of the obstacle corresponding to the obstacle information; and performing a task scheduling according to the safety level of the driving task. The method, the apparatus, the device and the computer readable storage medium provided by the present disclosure can determine the safety level of the obstacle, thereby assigning it to the driving task that deals with the obstacle. When the driving task is scheduled, the schedule can be performed according to the safety level of each driving task, so as to perform the task with the highest safety level preferentially and avoid a situation in which an urgent situation is unable to be dealt with in time.

## Description

### TECHNICAL FIELD

The present disclosure relates to computer technology and, in particular, to an autonomous driving technology.

### BACKGROUND

At present, the autonomous driving technology has gradually matured. Because a vehicle with an autonomous driving function determines a driving strategy depending on its own system, an autonomous driving system plays a decisive role in safety driving of the vehicle.

The autonomous driving system generates a corresponding driving task by identifying an environment around the vehicle and formulating a driving strategy based on surrounding environment.

When there are multiple driving tasks at the same time, how does the vehicle deal with these tasks plays a decisive role in safety driving of the vehicle.

### SUMMARY

The present disclosure provides a task scheduling method, an apparatus, a device and a computer readable storage medium to enable a vehicle to schedule multiple tasks.

A first aspect of the present disclosure provides a task scheduling method, including:
identifying obstacle information of an obstacle around a vehicle;
determining a safety level of the obstacle according to driving information and the obstacle information of the vehicle;
determining a driving task according to the obstacle information, and determining a safety level of the driving task according to the safety level of the obstacle corresponding to the obstacle information; and
performing a task scheduling according to the safety level of the driving task.

Optionally, the identifying obstacle information of an obstacle around a vehicle, includes:
acquiring environmental data of an environment around the vehicle through a sensor provided in the vehicle; and
identifying the obstacle according to the environmental data, and determining the obstacle information of each obstacle.

In the method provided in the embodiment, the environment data of the environment around the vehicle can be collected according to the sensor, and then a surrounding environment can be sensed according to the data.

Optionally, the determining a safety level of an obstacle according to driving information and the obstacle information of the vehicle, includes:
predicting a moving track of the obstacle according to the obstacle information; and
determining the safety level of the obstacle according to the driving information and the moving track of the obstacle.

In the method provided in the embodiment, a influence degree of each obstacle on the vehicle can be determined according to the moving track of the obstacle.

Optionally, the determining the safety level of the obstacle according to the driving information and the moving track of the obstacle, includes:
predicting a collision time of the vehicle with the obstacle according to the driving information and the moving track of the obstacle; and
determining the safety level of the obstacle according to the collision time.

In the method provided in the embodiment, the collision time of the vehicle with the obstacle can be predicted, and then an urgency degree of each obstacle affecting the driving of the vehicle can be determined according to the collision time.

Optionally, the driving information includes at least one of the following information:
a speed, a heading angle, am acceleration and a heading angular velocity.

Optionally, the performing a task scheduling according to the safety level of the driving task, includes:
determining a task with the highest safety level in the driving task, and performing the task with the highest safety level.

In the method provided in the embodiment, the task with a higher safety level can be performed preferentially, thereby responding in time to more urgent obstacles.

A second aspect of the present disclosure provides a task scheduling apparatus, including:
an identifying module, configured to identify obstacle information of an obstacle around a vehicle;
a level determining module, configured to determine a safety level of the obstacle according to driving information and the obstacle information of the vehicle;
a task processing module, configured to determine a driving task according to the obstacle information, and determine a safety level of the driving task according to the safety level of the obstacle corresponding to the obstacle information; and
a scheduling module, configured to perform a task scheduling according to the safety level of the driving task.

A third aspect of the present disclosure provides an electronic device, including:
at least one processor; and
a memory connected in communication with the at least one processor; where,
the memory stores instructions that are executable by the at least one processor, and the instructions are executed by the at least one processor to enable the at least one processor to execute any one of the task scheduling method according to the first aspect.

A fourth aspect of the present disclosure provides a non-transitory computer readable storage medium, having computer instructions stored thereon, the computer instructions are configured to enable the computer to execute any one of the task scheduling method according to the first aspect.

The task scheduling method, the apparatus, the device and the computer readable storage medium provided by the present disclosure, including: identifying the obstacle information of the obstacle around the vehicle; determining the safety level of the obstacle according to driving information and the obstacle information of the vehicle; determining the driving task according to the obstacle information, determining the safety level of the driving task according to the safety level of the obstacle corresponding to the obstacle information; and performing the task scheduling according to the safety level of the driving task. The method, the apparatus, the device and the computer readable storage medium provided by the present disclosure can determine the safety level of the obstacle, thereby assigning it to the driving task that deals with the obstacle. When the driving task is scheduled, the schedule can be performed according to the safety level of each driving task, so as to perform the task with the highest safety level preferentially and avoid a situation in which an urgent situation is unable to be dealt with in time.

### BRIEF DESCRIPTION OF THE DRAWINGS

The drawings are used to better understand the solutions, and do not constitute a limitation to the present application. Where:
FIG. 1 is an application scenario diagram shown in an exemplary embodiment of the present application;
FIG. 2 is a flowchart of a task scheduling method shown in an exemplary embodiment of the present application;
FIG. 3 is a flowchart of a task scheduling method shown in another exemplary embodiment of the present application;
FIG. 4 is a structural diagram of a task scheduling apparatus shown in an exemplary embodiment of the present application;
FIG. 5 is a structural diagram of a task scheduling apparatus shown in another exemplary embodiment of the present application; and
FIG. 6 is a block diagram of an electronic device shown in an exemplary embodiment of the present application.

### DETAILED DESCRIPTION OF THE EMBODIMENTS

Exemplary embodiments of the present application are described below with reference to the accompanying drawings, which include various details of the embodiments of the present application to facilitate understanding, and should be considered as merely exemplary. Therefore, those skilled in the art should recognize that various changes and modifications can be made to the embodiments described herein without departing from the scope and spirit of the present application. Similarly, for clarity and conciseness, descriptions of well-known functions and structures are omitted in the following description.

After an autonomous driving vehicle can sense a surrounding environment, it can formulate a driving task according to the surrounding environment, such as accelerating, decelerating, and changing a lane. The current autonomous driving system deals with tasks equally when scheduling the tasks, and there is a problem that an urgent task cannot be dealt with in time.

In the solutions provided in the embodiments of the present application, when a driving task is generated according to the surrounding environment, a safety level corresponding to the task is provided, so that a task with a higher safety level can be scheduled preferentially, that is, a more urgent and impending task makes the safety performance of the vehicle driving higher.

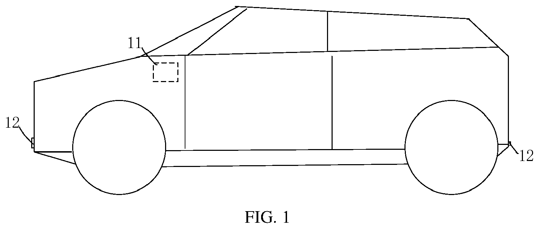

FIG. 1 is an application scenario diagram shown in an exemplary embodiment of the present application.

As shown in FIG. 1, the method provided in the embodiments may be applied to a vehicle with an autonomous driving function, and may specifically be executed by a control device 11 in the vehicle. The device may be, for example, an on-board computer.

The vehicle may also be provided with a sensor 12 for sensing the surrounding environment, and the control device 11 may perform identification according to environmental data collected by the sensor 12 to determine the surrounding environment, and specifically may determine a surrounding obstacle.

Specifically, the control device 11 can formulate a driving strategy according to the determined obstacle and generate a driving task, and then control the vehicle to drive according to the task. For example, it is needed to change a line in order to avoid an obstacle and needed to decelerate in order to avoid another obstacle. The control device 11 can determine a safety level according to the urgent degree of the vehicle avoiding the obstacle, and assign the safety level to the corresponding driving task, thereby the vehicle can avoid the more urgent obstacle preferentially.

Further, the control device 11 may be connected with the sensor 12, the connection may be specifically in a wired or wireless manner.

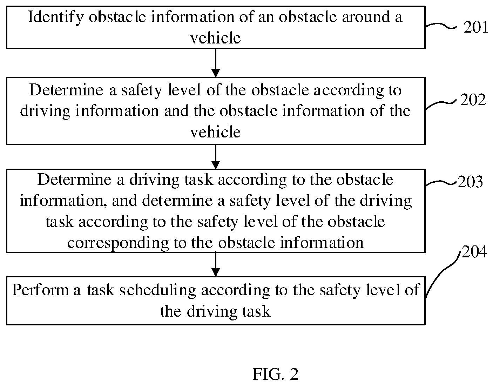

FIG. 2 is a flowchart of a task scheduling method shown in an exemplary embodiment of the present application.

As shown in FIG. 2, the task scheduling method provided in this embodiment includes:
Step 201, identify obstacle information of an obstacle around a vehicle.

The method provided in the embodiment may be performed by an electronic device with a computing capability, the electronic device may be, for example, a control device shown in FIG. l.The method provided in the embodiment may be provided in the electronic device to cause the electronic device to perform the method provided in the embodiment. The electronic device may be a single device or multiple devices.

Specifically, the electronic device can identify the obstacle information of the obstacle around the vehicle. Generally, when the vehicle drives on a road, there will be many obstacles around it, such as other vehicles, people, and roadblocks.

Further, a recognition method of an obstacle may be provided in the electronic device. A sensor, such as a camera and radar, can be provided in the vehicle to collect environmental data. The electronic device can receive the environmental data collected by the sensor, and deal with the environmental data by the recognition method, thereby identifying the obstacle in the surrounding environment.

In practical application, the environmental data can be sent to the electronic device after the environmental data is collected by the sensor. It also can be that the electronic device sends an acquisition request to the sensor, so that the sensor feeds back the environmental data.

The electronic device can determine information of the obstacle, such as a type of the obstacle, a position of the obstacle and the like. For example, the obstacle is a pedestrian, behind the vehicle.

Step 202, determine a safety level of the obstacle according to driving information and the obstacle information of the vehicle.

Specifically, the electronic device may also collect current driving information of the vehicle. If the electronic device is an on-board computer, the driving information can be acquired directly. If the electronic device is not the on-board computer, the electronic device can be connected with the on-board computer and acquires the driving information of the vehicle from the on-board computer.

Further, the driving information may include a driving speed, an acceleration and a driving direction of the vehicle and the like.

In practical application, the electronic device can determine a safety level of the obstacle corresponding to each obstacle according to current driving information of the vehicle and current obstacle information of an obstacle around the vehicle.

A moving track of the obstacle can be predicted according to the obstacle information, for example, it will move from the right side of the vehicle to the left side of the vehicle. Specifically, the moving track of the obstacle may also include moving speed, or a position of the obstacle at different times. The electronic device can determine information of collision with various obstacles, if the vehicle continues to drive with the current driving information.

For example, if there are 5 obstacles around the vehicle, it can be determined that information of collision of the vehicle with the 5 obstacles can be that a collision will occur 10 seconds later, a collision will occur 20 seconds later, a collision will occur 1 minute later, no collision will occur and no collision will occur. It can be assumed that the vehicle drives forward, and there are two obstacles at the back of the vehicle, the vehicle will not collide with the two obstacles.

Specifically, the safety level corresponding to each obstacle can be determined according to the information of collision of the vehicle with obstacle. For example, an obstacle that first collides with the vehicle may be set with the highest safety level.

Step 203, determine a driving task according to the obstacle information, and determine a safety level of the driving task according to the safety level of the obstacle corresponding to the obstacle information.

Further, the electronic device may also determine the driving task according to the obstacle information.

In practical application, the vehicle needs to avoid each obstacle when it drives on the road to avoid a collision with other objects. For each obstacle, the corresponding driving task can be determined according to the obstacle information. For example, for an obstacle directly in front of the vehicle, a braking task can be determined. For an obstacle that is far away from the vehicle, a deceleration task can be determined.

The driving task can inherit the safety level of the corresponding obstacle. For example, if the driving task is formulated according to information of the obstacle A, the safety level of the driving task is consistent with the safety level of the obstacle A.

Specifically, some obstacles may not affect a normal driving of the vehicle, for example, objects outside the road. At this time, the driving task may not be determined for these obstacles. For example, when the obstacle is identified by an identification algorithm, the obstacle that does not affect the normal driving of the vehicle can be identified. Thereby, the driving task can be generated only according to the obstacle information that will affect the driving of the vehicle.

Step 204, perform a task scheduling according to the safety level of the driving task.

Further, when the electronic device performs the driving task, a task that is preferentially performed can be determined according to the safety level.

In practical application, a task with a higher safety level can be performed preferentially. If there are tasks that have not been performed currently and there is a newly added driving task, if the newly added driving task has a higher safety level, the new task will be performed.

The driving task can be sorted according to the safety level, and a driving task with a higher safety level can be determined according to the sorting result, so that the driving task with a higher safety level can be performed.

The method provided in the embodiment is used for scheduling tasks, the method is performed by a device provided with the method provided in the embodiment, and the device is generally implemented in a hardware and/or software manner.

The task scheduling method provided in the embodiment includes: identifying the obstacle information of the obstacle around the vehicle; determining the safety level of the obstacle according to the driving information and the obstacle information of the vehicle; determining the driving task according to the obstacle information, determining the safety level of the driving task according to the safety level of the obstacle corresponding to the obstacle information; and performing the task scheduling according to the safety level of the driving task. The method provided in the embodiment can determine the safety level of the obstacle, thereby assigning it to the driving task that deals with the obstacle. When the driving task is scheduled, the schedule can be performed according to the safety level of each driving task, so as to perform the task with the highest safety level preferentially and avoid a situation in which an urgent situation is unable to be dealt with in time.

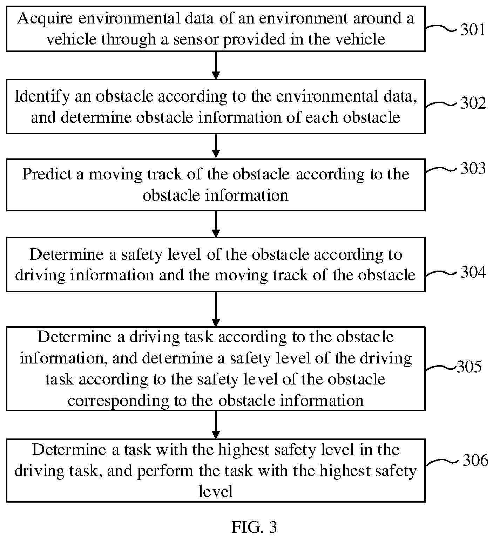

FIG. 3 is a flowchart of a task scheduling method shown in another exemplary embodiment of the present application.

As shown in FIG. 3, the task scheduling method provided in the embodiment includes:
Step 301, acquire environmental data of an environment around a vehicle through a sensor provided in the vehicle.

In the method provided in the embodiment, the sensor is provided in the vehicle, and the type of the sensor includes, but is not limited to:
a camera, a radar and a lidar.

Specifically, the sensor may be connected with an electronic device for performing the method provided in the embodiment. Specifically, the connection can be in a wired or wireless manner.

Further, when the vehicle starts, a battery in the vehicle can supply power to the sensor, so that the sensor can work normally.

In practical application, the sensor can collect environmental data of the environment around the vehicle and send it to the electronic device, so that the electronic device can identify the environment around the vehicle according to the environmental data.

Step 302, identify an obstacle according to environmental data, and determine obstacle information of each obstacle.

An obstacle identifying method can be provided in the electronic device, and the electronic device may process the environmental data through this method to determine the obstacle around the vehicle. For example, if the environmental data is a picture, the electronic device can identify an obstacle included in the picture.

Specifically, the electronic device can also determine information of each obstacle, such as a relative position of the obstacle and the vehicle, and the type of the obstacle.

Step 303, predict a moving track of the obstacle according to the obstacle information.

Further, the type of the obstacle can be determined according to the obstacle information, for example, the obstacle that can move, such as a vehicle, a pedestrian, etc., and for example, a static obstacle, such as a roadblock.

In practical application, if it is determined that the obstacle is a movable object, the moving track of the obstacle can also be predicted, for example, a moving track of a pedestrian and a moving track of a vehicle. Moving data of the obstacle can be determined according to continuously acquired environmental data, such as direction and speed. Thereby, the moving track of the obstacle can be predicted.

Step 304, determine a safety level of the obstacle according to driving information and the moving track of the obstacle.

The electronic device may also acquire current driving information of the vehicle. For example, the driving information of the vehicle is read directly.

Specifically, the driving information includes at least one of the following information:
a speed, a heading angle, am acceleration and a heading angular velocity.

Further, the rotational speed of an engine can be read to determine the speed. The acceleration can be determined according to continuous rotational speeds. In addition, rotation data of a steering wheel can be read to determine the heading angle and heading angular velocity of the vehicle.

In practical application, the electronic device can determine the safety level of each obstacle by combining the driving information and the moving track of each obstacle.

The safety level is used to measure a danger degree of the obstacle, and an obstacle that the vehicle may first hit has the highest safety level. A collision time of the vehicle with the obstacle can be predicted according to the driving information and the moving track of the obstacle; the safety level of the obstacle is determined according to the collision time.

Specifically, it can be assumed that the vehicle continues to drive with the current driving information, so that the driving track of the vehicle can be determined. Therefore, the collision time of the vehicle with the obstacle can be predicted according to the driving track and the moving track of the obstacle. That is, the time that the vehicle collides with an obstacle when the vehicle continues to drive with the current driving information can be predicted.

Further, if the vehicle is likely to collide with the obstacle, the corresponding collision time may be determined, and if the vehicle will not collide with the obstacle, the determined collision time may be "null, infinity", etc.

In practical application, the shorter the collision time of the vehicle with the obstacle, the higher the safety level of the obstacle, and the more urgent the situation for the obstacle. Therefore, the safety level of each obstacle can be determined according to the collision time corresponding to the obstacle. For example, a reciprocal of the collision time can be used as the safety level of the obstacle.

Step 305, determine a driving task according to the obstacle information, and determine a safety level of the driving task according to the safety level of the obstacle corresponding to the obstacle information.

The specific principle and implementation of step 305 is similar to the specific principle and implementation of step 203, which will be not repeated here.

Step 306, determine a task with the highest safety level in the driving task, and perform a task with the highest safety level.

The driving task can be sorted according to the safety level, and the task with the highest safety level can be performed.

Specifically, a high level task can preempt a low level task. When a new task is added into a task list, if a safety level of the new task is high, the high level task will be performed preferentially, so as to preferentially deal with the obstacle for which collision is more likely to occur.

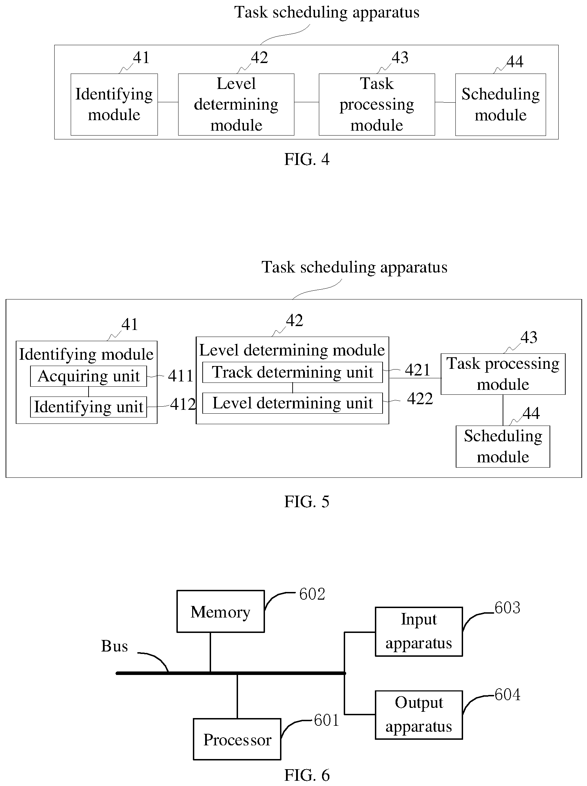

FIG. 4 is a structural diagram of a task scheduling apparatus shown in an exemplary embodiment of the present application.

As shown in FIG. 4, the task scheduling apparatus provided in the embodiment includes:
an identifying module 41, configured to identify obstacle information of an obstacle around a vehicle;
a level determining module 42, configured to determine a safety level of the obstacle according to driving information and the obstacle information of the vehicle;
a task processing module 43, configured to determine a driving task according to the obstacle information, and determine a safety level of the driving task according to the safety level of the obstacle corresponding to the obstacle information; and
a scheduling module 44, configured to perform a task scheduling according to the safety level of the driving task.

The task scheduling apparatus provided in the embodiment includes: the identifying module, configured to identify the obstacle information of the obstacle around the vehicle; the level determining module, configured to determine the safety level of the obstacle according to the driving information and the obstacle information of the vehicle; the task processing module, configured to determine the driving task according to the obstacle information, and determine the safety level of the driving task according to the safety level of the obstacle corresponding to the obstacle information; the scheduling module, configured to perform the task scheduling according to the safety level of the driving task. The apparatus provided in the embodiment can determine the safety level of the obstacle, thereby assigning it to the driving task that deals with the obstacle. When the driving task is scheduled, the schedule can be performed according to the safety level of each driving task, so as to perform the task with the highest safety level preferentially and avoid a situation in which an urgent situation is unable to be dealt with in time.

FIG. 5 is a structural diagram of a task scheduling apparatus shown in another exemplary embodiment of the present application.

On the basis of above embodiment, in the task scheduling apparatus provided in the embodiment, the identifying module 41 includes:
an acquiring unit 411, configured to acquire environmental data of an environment around the vehicle through a sensor provided in the vehicle; and
an identifying unit 412, configured to identify the obstacle according to the environmental data, and determine the obstacle information of each obstacle.

Optionally, the level determining module 42 includes:
a track determining unit 421, configured to predict a moving track of the obstacle according to the obstacle information; and
a level determining unit 422, configured to determine the safety level of the obstacle according to the driving information and the moving track of the obstacle.

Optionally, the level determining unit 422 is specifically configured to:
predict a collision time of the vehicle with the obstacle according to the driving information and the moving track of the obstacle; and
determine the safety level of the obstacle according to the collision time.

Optionally, the driving information includes at least one of the following information:
a speed, a heading angle, am acceleration and a heading angular velocity.

Optionally, the scheduling module 44 is specifically configured to:
determine a task with the highest safety level in the driving task, and perform the task with the highest safety level.

According to an embodiment of the present application, the present application further provides an electronic device and a readable storage medium.

FIG. 6 is a block diagram of an electronic device of a task scheduling method according to an embodiment of the present application. The electronic device is intended to represent various forms of digital computers, such as laptop computers, desktop computers, workbenches, personal digital assistants, servers, blade servers, mainframe computers, and other suitable computers. The electronic device may also represent various forms of mobile apparatus, such as personal digital assistants, cellular phones, smart phones, wearable devices, and other similar computing apparatus. The components, their connections and relationships, and their functions shown herein are merely used as examples, and are not intended to limit the implementations of the present application described and/or required herein.

As shown in FIG. 6, the electronic device includes: one or more processors 601, a memory 602, and interfaces for connecting various components, including a high-speed interface and a low-speed interface. The various components are interconnected using different buses and can be installed on a common motherboard or installed in other ways as required. The processor can process instructions executed within the electronic device, including instructions stored in or on the memory for displaying graphical information of a Graphical User Interface (GUI) on an external input/output apparatus (such as a display device coupled to the interface). In other implementations, multiple processors and/or multiple buses can be used with multiple memories, if required. Similarly, multiple electronic devices can be connected, each providing some necessary operations (for example, as a server array, a set of blade servers, or a multiprocessor system). One processor 601 is taken as an example in FIG. 6.

The memory 602 is a non-transitory computer readable storage medium provided by the present application. Where, the memory stores instructions that are executable by at least one processor to enable the at least one processor to execute the task scheduling method provided by the present application. The non-transitory computer readable storage medium of the present application stores computer instructions, which are used to enable a computer to execute the task scheduling method provided by the present application.

As a non-transitory computer readable storage medium, the memory 602 may be used to store non-transitory software programs, non-transitory computer executable programs and modules, such as program instructions/modules corresponding to the task scheduling method in the embodiments of the present application (for example, the identifying module 41, the level determining module 42, and the task processing module 43 and the scheduling module 44 shown in FIG. 4). The processor 601 executes various functional applications and data processing of the server by running non-transitory software programs, instructions, and modules stored in the memory 602, that is, to implement the task scheduling method in the above method embodiments.

The memory 602 may include a program storage area and a data storage area, where the program storage area may store an operating system and an application program required for at least one function; the data storage area may store the data created according to the use of the task scheduling electronic device, etc. In addition, the memory 602 may include a high-speed random access memory, and may also include a non-transitory memory, such as at least one magnetic disk storage device, a flash memory device, or other non-transitory solid-state storage device. In some embodiments, the memory 602 may optionally include a memory that is remotely disposed relative to the processor 601, the remote memory may be connected to the task scheduling electronic device through a network. Examples of the above network include, but are not limited to, the Internet, an intranet, a local area network, a mobile communication network and combinations thereof.

The electronic device of the task scheduling method may further include: an input apparatus 603 and an output apparatus 604. The processor 601, the memory 602, the input apparatus 603 and the output apparatus 604 may be connected through a bus or with other manners. The connection through the bus is taken as an example in FIG. 6.

The input apparatus 603 may receive inputted numeric or character information, and generate key signal input related to user settings and function control of the task scheduling electronic device, such as a touch screen, a keypad, a mouse, a trackpad, a touch pad, a pointing stick, one or more mouse buttons, a trackball, a joystick and other input apparatus. The output apparatus 604 may include a display device, an auxiliary lighting apparatus (for example, an LED), a tactile feedback apparatus (for example, a vibration motor), and the like. The display device may include, but is not limited to, a liquid crystal display (LCD), a light emitting diode (LED) display, and a plasma display. In some implementations, the display device may be a touch screen.

Various implementations of the systems and technologies described here may be implemented in digital electronic circuitry systems, integrated circuit systems, specific ASICs (application specific integrated circuits), computer hardware, firmware, software, and/or combinations thereof. These various implementations may include: being implemented in one or more computer programs that are executable and/or interpreted on a programmable system including at least one programmable processor, where the programmable processor may be a dedicated or general-purpose programmable processor that may receive data and instructions from a storage system, at least one input apparatus and at least one output apparatus, and transmit data and instructions to the storage system, the at least one input apparatus and the at least one output apparatus.

These computing programs (also known as programs, software, software applications, or codes) include machine instructions of a programmable processor, and can be implemented utilizing advanced processes and/or object-oriented programming languages, and/or assembly/machine languages. As used herein, the terms "machine-readable medium" and "computer readable medium" refer to any computer program product, device, and/or apparatus (for example, a magnetic disk, an optical disk, a memory, a programmable logic device (PLD)) used to provide machine instructions and/or data to the programmable processor, and includes machine-readable media that receive machine instructions as machine-readable signals. The term "machine-readable signal" refers to any signal used to provide machine instructions and/or data to the programmable processor.

In order to provide interaction with the user, the systems and technologies described here can be implemented on a computer that has: a display apparatus (for example, a CRT (cathode ray tube) or an LCD (liquid crystal display) monitor) for displaying information to the user; and a keyboard and pointing apparatus (for example, a mouse or a trackball) through which the user can provide input to the computer. Other kinds of apparatuses may also be used to provide interaction with the user, for example, the feedback provided to the user may be any form of sensory feedback (for example, visual feedback, auditory feedback, or tactile feedback); and may receive input from the user in any form (including acoustic input, voice input, or tactile input).

The systems and technologies described here can be implemented in a computing system that includes background components (for example, as a data server), or a computing system that includes middleware components (for example, an application server), or a computing system that includes front-end components (for example, a user computer with a graphical user interface or a web browser, through which the user can interact with the implementations of the systems and technologies described here), or a computing system that includes any combination of such background components, middleware components or front-end components. The components of the system may be interconnected by any form or medium of digital data communication (for example, a communication network). Examples of the communication network include: a local area network (LAN), a wide area network (WAN), and the Internet.

A computer system can include a client and a server. The client and the server are generally remote from each other and usually interact through a communication network. A client-server relationship is generated by computer programs running on corresponding computers and having the client-server relationship with each other.

It should be understood that the various forms of processes shown above can be used, and steps can be reordered, added, or deleted. For example, the steps described in the present application can be executed in parallel, or sequentially, or in different orders, as long as the desired results of the technical solutions disclosed in the present application can be realized, there is no limitation herein.

The above specific implementations do not constitute a limitation to the protection scope of the present application. It should be understood by those skilled in the art that various modifications, combinations, sub-combinations, and substitutions may be made according to design requirements and other factors. Any modification, equivalent replacement and improvement made within the spirit and principle of the present application shall be included in the protection scope of the present application.

## Claims

1. A task scheduling method, comprising:
identifying (201) obstacle information of an obstacle around a vehicle;
determining (202) a safety level of the obstacle according to driving information and the obstacle information of the vehicle;
determining (203, 305) a driving task according to the obstacle information, and determining a safety level of the driving task according to the safety level of the obstacle corresponding to the obstacle information; and
performing (204) a task scheduling according to the safety level of the driving task.

2. The method according to claim 1, wherein the identifying (201) obstacle information of an obstacle around a vehicle, comprises:
acquiring (301) environmental data of an environment around the vehicle through a sensor provided in the vehicle; and
identifying (302) the obstacle according to the environmental data, and determining the obstacle information of each obstacle.

3. The method according to claim 1, wherein the determining (202) a safety level of an obstacle according to driving information and the obstacle information of the vehicle, comprises:
predicting (303) a moving track of the obstacle according to the obstacle information; and
determining (304) the safety level of the obstacle according to the driving information and the moving track of the obstacle.

4. The method according to claim 3, wherein the determining (304) the safety level of the obstacle according to the driving information and the moving track of the obstacle, comprises:
predicting a collision time of the vehicle with the obstacle according to the driving information and the moving track of the obstacle; and
determining the safety level of the obstacle according to the collision time.

5. The method according to claim 3 or 4, wherein the driving information comprises at least one of the following information:
a speed, a heading angle, am acceleration and a heading angular velocity.

6. The method according to claim 1, wherein the performing (204) a task scheduling according to the safety level of the driving task, comprises:
determining (306) a task with the highest safety level in the driving task, and performing the task with the highest safety level.

7. A task scheduling apparatus, comprising:
an identifying module (41), configured to identify obstacle information of an obstacle around a vehicle;
a level determining module (42), configured to determine a safety level of the obstacle according to driving information and the obstacle information of the vehicle;
a task processing module (43), configured to determine a driving task according to the obstacle information, and determine a safety level of the driving task according to the safety level of the obstacle corresponding to the obstacle information; and
a scheduling module (44), configured to perform a task scheduling according to the safety level of the driving task.

8. The apparatus according to claim 7, wherein the identifying module (41) comprises:
an acquiring unit (411), configured to acquire environmental data of an environment around the vehicle through a sensor provided in the vehicle; and
an identifying unit (412), configured to identify the obstacle according to the environmental data, and determine the obstacle information of each obstacle.

9. The apparatus according to claim 7, wherein the level determining module (42) comprises:
a track determining unit (421), configured to predict a moving track of the obstacle according to the obstacle information; and
a level determining unit (422), configured to determine the safety level of the obstacle according to the driving information and the moving track of the obstacle.

10. The apparatus according to claim 9, wherein the level determining unit (422) is specifically configured to:
predict a collision time of the vehicle with the obstacle according to the driving information and the moving track of the obstacle; and
determine the safety level of the obstacle according to the collision time.

11. The apparatus according to claim 9 or 10, wherein the driving information comprises at least one of the following information:
a speed, a heading angle, am acceleration and a heading angular velocity.

12. The apparatus according to claim 7, wherein the scheduling module (44) is specifically configured to:
determine a task with the highest safety level in the driving task, and perform the task with the highest safety level.

13. The apparatus according to any one of claims 7 to 12, wherein the obstacle information comprises at least one of the following information:
a type of the obstacle and a position of the obstacle.

14. An electronic device, comprising:
at least one processor; and
a memory connected in communication with the at least one processor; wherein,
the memory stores instructions that are executable by the at least one processor, and the instructions are executed by the at least one processor to enable the at least one processor to execute the method according to any one of claims 1 to 6.

15. A non-transitory computer readable storage medium, having computer instructions stored thereon, wherein the computer instructions are configured to enable the computer to execute the method according to any one of claims 1 to 6.
